Europäisches Patentamt

European Patent Office

Office européen des brevets

(19)

(11) **EP 1 387 322 A1**

(12) **EUROPEAN PATENT APPLICATION**
published in accordance with Art. 158(3) EPC

(43) Date of publication:
**04.02.2004 Bulletin 2004/06**

(51) Int Cl.⁷: **G06T 15/50**

(21) Application number: **02718639.4**

(22) Date of filing: **23.04.2002**

(86) International application number:
**PCT/JP2002/004018**

(87) International publication number:
**WO 2002/089065 (07.11.2002 Gazette 2002/45)**

(84) Designated Contracting States:
**DE GB**

(30) Priority: **23.04.2001 JP 2001123799**

(71) Applicant: **PFU LIMITED**
**Kahoku-gun Ishikawa 929-1192 (JP)**

(72) Inventors:
• **ARUGA, Naruki, c/o PFU LIMITED**
**Kahoku-gun, Ishikawa 929-1192 (JP)**

• **NAKAYAMA, Keiko, c/o PFU LIMITED**
**Kahoku-gun, Ishikawa 929-1192 (JP)**

(74) Representative: **Reichel, Wolfgang, Dipl.-Ing. et al**
**Reichel und Reichel Patentanwälte,**
**Parkstrasse 13**
**60322 Frankfurt am Main (DE)**

(54) **ELECTROMAGNETIC WAVE SIMULATION APPARATUS AND METHOD, AMD 3-DIMENSIONAL MODEL DATA CREATION APPARATUS**

(57)    An electromagnetic simulation device has means for dividing space existing within three-dimensional model data into a plurality of cells, and transmission means for generating electromagnetic energy information with regards to each of the plurality of cells, for between cells and neighboring other cells, in accordance with electromagnetic energy transmission conditions of the cells.

# FIG.1

**Description**

TECHNICAL FIELD

This invention relates to an electromagnetic wave simulation device and method and a three-dimensional model data generating device, and particularly relates to an electromagnetic wave simulation device and method and three-dimensional model data generating device capable of carrying out electromagnetic distribution simulations of light etc. at relatively high speeds.

BACKGROUND ART

Simulation of light is a substantial problem in processing for generating images (hereinafter referred to as three-dimensional computer graphics processing; three-dimensional CG processing) that can be seen in three-dimensions using a computer. Light plays a predominant role not just with regards to the shape of an object, but also in the implementation of realism and texture in three-dimensional CG processing. For example, a flat image will be given a three-dimensional effect simply by applying shadowing, with the image being made more realistic as a result. Further, light governs impressions of interiors of buildings. Results of displaying interiors can therefore be confirmed before actually making the interior by making an image using three-dimensional CG processing.

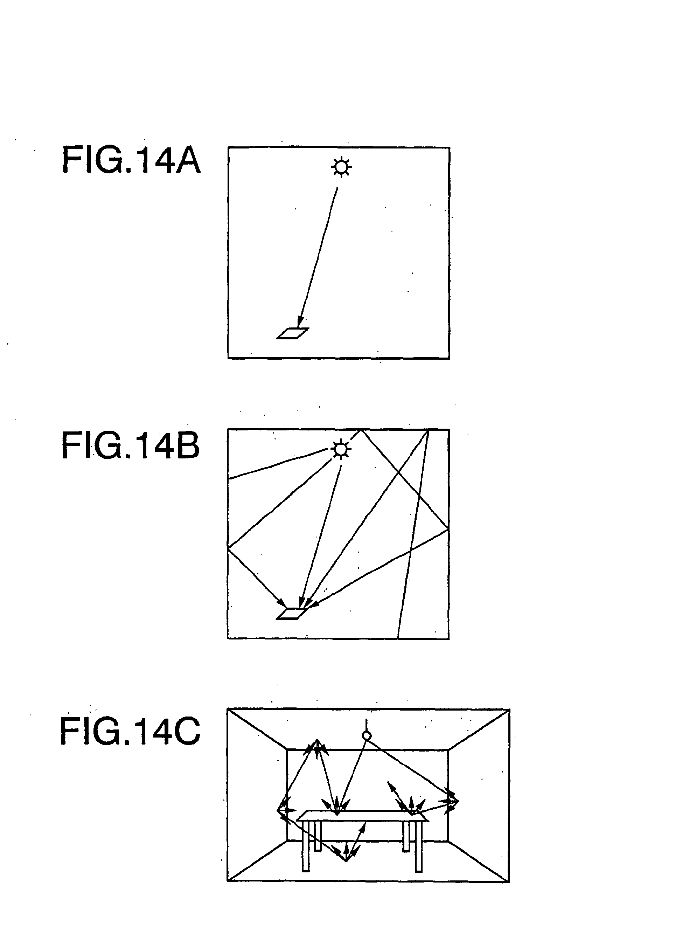

It is therefore necessary for this kind of three-dimensional image to be extremely close to the real thing. To this end, the global illumination (overall illumination) shown in FIG. 14B is now taken into consideration. Namely, as shown in FIG. 14C, in addition to the relationship between the point of the noted object, incident light due to reflection and diffraction of light by other bodies (wall, floor, ceiling) is also considered. In this way, accurate light simulation is possible for overall illumination. For example, space in the vicinity of a red wall may be shown as incurring a red impression, and the vicinity of or rear side of a light on a ceiling may be rendered blurred and dimly lit.

In this respect, technology for three-dimensional CG processing applied to moving pictures in, for example, computer games truncates accurate light simulation in order to ensure that changes in a moving image occur in real time. Specifically, only the local illumination (localized illumination) shown in FIG. 14A is considered, and the overall illumination shown in FIG. 14B is not considered at all. Localized illumination obtains brightness and color only from the relationship between points on the noted object and a light source. Light incident due to reflection and refraction by other objects is not considered. Accurate light simulation using overall illumination is therefore not possible, and rendering such as giving a space in the vicinity of a red wall a red impression is therefore not possible.

In the related art, a radiocity method and Monte Carlo sampling method (hereinafter referred to as Monte Carlo method) are well known as methods for carrying out accurate light simulation using overall illumination. However, in light simulation employing overall illumination, innumerable repeated reflections exist due to the walls and floors, etc. The handling of diffusing surfaces and surfaces that reflect light in all directions without luster is particularly difficult. In reality, the above method presents problems with respect to precision and total amount of time.

For example, according to the radiocity method, it is necessary to divide all of the surfaces up into small surfaces and total up the mutual exchanges of energies (light intensities) occurring between all of the small surfaces. It therefore takes a considerable amount of time in simulation to achieve this (for example, a number of days) even for still images. Further, it is assumed that the light is provided equally in all directions from the small surfaces. It is therefore not possible to handle the small surfaces as polished or mirrored surfaces (an environment where the direction of the emission of light is decided by the direction of incidence of the light). It is therefore typically not possible to simulate conditions where there is a mirror in a room, with the exception of special cases such as mirrors with completely smooth plane surfaces. Methods such as expansion of an algorithm and methods of use in combination with other methods have been proposed (this is not to say that the radiocity method is compatible with reflections at mirrored surfaces but, taking the concept of model data, simulation is possible in a manner of speaking for conditions where the surface can be said to be a completely smooth surface), but these cause the total time involved to be further increased.

According to the Monte Carlo method, photons from a light source are emitted in arbitrary directions, and are required to be traced until the photons have collided (so that light is emitted) over the entire plane. In this step, photons are reflected if the photons collide with a mirrored surface and if the photons collide with a diffusing surface, this is taken to be a surface that irradiates light making a "blur" of light at a certain area of the light, and mirrored surfaces and refraction can therefore be permitted (expression is superior). However, if mirrored surfaces and refraction are permitted, numerous photons have to be emitted until photons have collided with all of the planes. This is not possible in reality, and the number of emissions therefore eventually has to be taken to be a number capable of satisfying the user. It therefore takes a considerable amount of time (for example, a number of days) in simulation to obtain sufficient results even for still images. On the other hand, when simulation is completed in a short period of time, the number of discharged photons is small, the precision of the whole of the distribution of intensity of illumination cannot be guaranteed and it is possible that small objects will not be represented accurately.

It is an object of the present invention to provide an electromagnetic simulation device and method capable of simulating the distribution of electromagnetic waves such as light, etc.

It is a further object of the present invention to provide a three-dimensional model data generating device capable of carrying out simulation of distribution of energy of electromagnetic waves at comparatively high speeds and then generating three-dimensional model data based on this simulation.

DISCLOSURE OF INVENTION

An electromagnetic simulation device of the present invention comprises dividing means for dividing space where three-dimensional model data exists into a plurality of cells, and propagation means for generating propagation information for energy of electromagnetic waves for between a cell and other neighboring cells in accordance with electromagnetic wave energy propagation conditions for the cell for each of the plurality of cells.

An electromagnetic simulation method of the present invention comprises dividing three-dimensional space where model data exists into a plurality of cells, and generating propagation information for energy for between a cell and other neighboring cells in accordance with energy propagation conditions for the cells for each cell of the plurality of cells.

In the electromagnetic wave simulation device and method of the present invention, energy propagation information is obtained for each cell of the plurality of cells by only carrying out energy propagation between neighboring cells. It is therefore possible to carry out calculations for energy transmission on a limited number of cells, and a range of cells neighboring these cells. Simulation of energy distribution of electromagnetic waves such as light etc. can therefore be carried out in a relatively short period of time even when the size of the cells is made extremely small and the number of cells is increased in order to raise simulation precision. Further, propagation can be handled as propagation at polished and mirrored surfaces and realism can be increased by limiting by putting various propagation conditions on propagation of energy between neighboring cells. The simulation of energy distribution of electromagnetic waves such as light can therefore be carried out at relatively high speeds.

A three-dimensional model data generating device of the present invention comprises dividing means for dividing space where three-dimensional model data exists into a plurality of cells, propagation means for generating propagation information for energy of electromagnetic waves for between a cell and other neighboring cells in accordance with electromagnetic wave energy propagation conditions for the cell for each of the plurality of cells, and generating means for generating three-dimensional modal data taking into consideration propagation of electromagnetic wave energy in the space by combining the three-dimensional model data and propagation information for energy of electromagnetic for each cell of the plurality of cells obtained by the propagation means.

According to the three-dimensional model data generating device of the present invention, composite model data for use in three-dimensional CG processing generating images can be obtained by combining the propagation information for the energy of each cell of the plurality of cells obtained at relatively high-speed as described above with the model data. If processing is carried out using well-known three-dimensional CG processing using composite model data including these energy states, images can be made in half the time or less when compared to the radiocity method and Monte Carlo method, propagation can be handled as propagation at polished and mirrored surfaces and realism can be increased by limiting by putting various propagation conditions on propagation of energy between neighboring cells, simulation precision can be improved and more realistic images can be made.

BRIEF DESCRIPTION OF DRAWINGS

FIG. 1 is a structural view of an optical simulation device.
FIG. 2 is view illustrating an optical simulation device.
FIG. 3 is view illustrating an optical simulation process.
FIG. 4 is view illustrating an optical simulation process.
FIG. 5 is view of an optical simulation process flow.
FIG. 6 is view of an optical simulation process flow.
FIG. 7 is view illustrating an optical simulation process.
FIG. 8 is view illustrating an optical simulation process.
FIG. 9 is view illustrating an optical simulation process.
FIG. 10 is view illustrating an optical simulation process.
FIG. 11 is view illustrating composite model data.
FIG. 12 is further view illustrating composite model data.
FIG. 13 is a view illustrating the range of application of the present invention.

FIG. 14 is a view illustrating localized illumination/overall illumination.

BSET MODE FOR CARRING OUT THE INVENTION

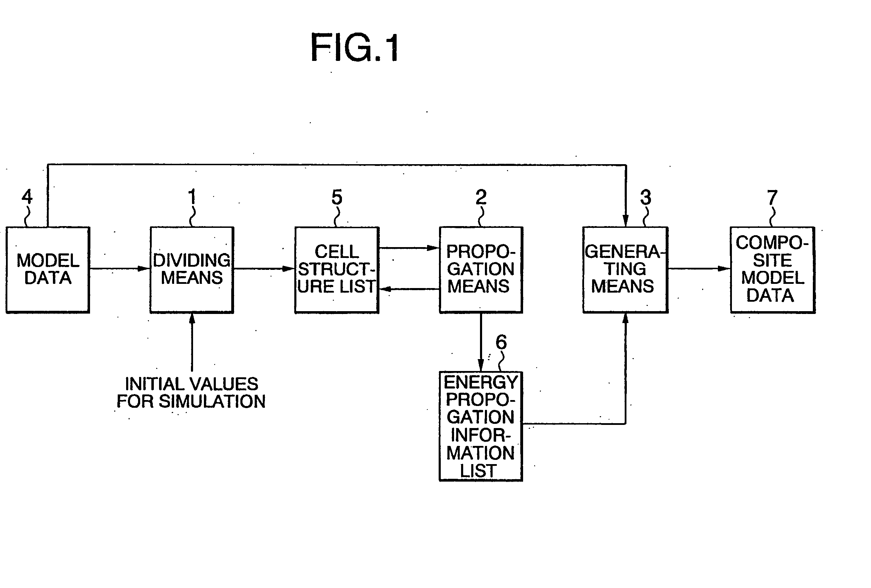

FIG. 1 is a view of the structure of a light simulation device, showing the configuration of an optical simulation device of the present invention, i.e. showing an electromagnetic wave simulation device for when the electromagnetic radiation is light (visible light).

The light simulation device comprises dividing means 1, transmission means 2, and generating means 3. Further, model data 4, a cell structure list 5, an energy transmission information list 6 and composite model data 7 are provided at a storage device (not shown). The model data 4 is provided in advance, with other data being created in the optical simulation process. Some of the initial values for the energy transmission conditions, i.e. information relating to space (property, coordinate positions within space, etc.) are provided as the model data 4, with the remainder, i.e. information relating to energy (intensity and direction, etc. of the light source) being provided as initial values for the simulation.

Before describing the light simulation device of the present invention, first, a simple description is given of the theory of light simulation of the present invention. The light simulation of the present invention carries out simulation using a new model differing to that of the related art for the transmission of energy such as light.

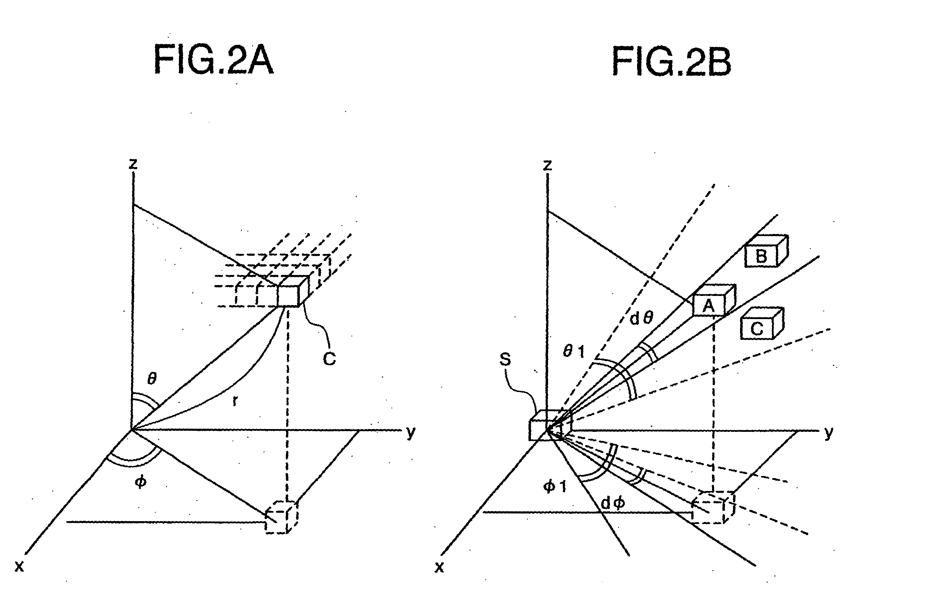

Namely, as shown in FIG. 2A, the space is divided into a plurality of cells C and simulation is carried out by the energy of the light etc. being transmitted just for in between neighboring cells in accordance with prescribed energy transmission conditions, and these results are combined with the original model data 4.

With this simulation, as shown in FIG. 2A, the positions of the cells are expressed using polar coordinates in order to utilize the radial dispersion of energy. In addition, as shown in FIG. 2B, energy transmitted to other cells A from the light source cell S is only transmitted at a range where the range $(\theta 1, \phi 1)$ of the (emitted) energy and the range $(d\theta, d\phi)$ of the size of the cell A overlap. Namely, simulation is such that energy is transmitted from cell A to cell B and energy is not transmitted to cell C.

When transmitted energy reaches the bodies (constituted by cells) such as the wall surface etc. in this simulation, transmission in the aforementioned direction from the energy source is temporarily halted at the cell. Further transmission simulation is then carried out taking a new cell as a (simulated) energy source and this is then added to the previous simulation results. Namely, the transmission of energy is extremely simplified.

This temporary halting of the simulation is by no means limited to the case of transmitted energy reaching a body such as a wall surface, etc. Namely, when energy reaches a reflective body, the simulation is temporarily stopped, and a further simulation is performed taking the cell as a simulated energy source. When transmitted energy reaches a semi-transparent body, results are obtained both for when simulation is continued as is and when simulation is halted are obtained, and processing is performed based on these results.

Therefore, in the present invention, it is sufficient simply to carry out calculations for energy transmission on a limited number of cells, and a range of cells neighboring these cells. This means that it is possible to proceed without having to consider combinations of enormous numbers of limitless small surfaces carrying out exchange of energy and the emission and reflection etc. of limitless numbers of photons. In this way, the time required for simulation can be made less than half that of the related art even when the size of the cells is made extremely small and the number of cells is increased. Further, the transmission of energy is limited by the content of the settings for the energy transmission conditions. As a result, the transmission can be handled as transmission at polished and mirrored surfaces and this can be broadly applied to simulation of the propagation of electromagnetic waves other than light.

In FIG. 1, the dividing means 1 divides up the processing target space into a plurality of cells based on the model data 4. The processing target space is space where the model data 4 exists. The processing target space is decided by the provided model data 4. The model data 4 is three-dimensional data and the processing target space is three-dimensional space. A cell is a three-dimensional unit of space and is normally taken to be cubic. (Identification) numbers are assigned to each of the plurality of cells resulting from the dividing process.

The transmission means 2 generates energy propagation information for between cells and other neighboring cells in accordance with energy propagation conditions for the cells for each of the plurality of cells. In this process, first, the transmission means 2 generates the cell structure list 5 storing the energy propagation conditions for the cells for each of the plurality of cells. The energy propagation conditions can be considered to correspond to the state prior to energy propagation. The (initial values for) the energy propagation conditions are described in the cell structure list 5. The propagation means 2 is a propagation (processing) routine called by the dividing means 1.

The propagation means 2 carries out prescribed calculations, calculates energy propagation information, and adds this information to the column for this cell in the cell structure list 5 based on the energy propagation conditions for the cells in the cell structure list 5 for each of the plurality of cells. The energy propagation information can be considered to correspond to the state after energy propagation. In this way, simulation results for the state before and after propagation of the energy for a cell can be obtained at the cell structure list 5.

Further, the propagation means 2 finally makes and saves the energy transmission information list 6 for each of the plurality of cells. Making and saving the energy transmission information list 6 can be omitted when the cell structure list 5 is saved. The energy transmission information list 6 is, for example, made in parallel with the cell structure list 5 (or may be made after completion of the creation of the cell structure list 5). The energy transmission information list 6 stores all of the energy propagation information for the cells for each of the plurality of cells.

In this way, propagation information for energy of each of the plurality of cells can be obtained for the space for which simulation has been temporarily stopped. When a new medium or object is inserted into the space for which simulation is completed, simulation is only re-executed by the propagation means 2 for propagation of energy for portions which are changed by the new medium or body of the whole of the energy propagation paths. In other words, it is not necessary to repeat the simulation from the start for this space. It is therefore possible to combine the model data 4 and the simulation results in a short period of time when a medium or body is newly introduced into the space by providing the energy transmission information list 6 separately.

The generating means 3 then combines the energy propagation information for each of the plurality of cells obtained by the propagation means 2 and the model data 4. In this way, the generating means 3 generates composite model data 7 taking into consideration the propagation of energy occurring in the processing target space. For example, for certain model data 4, simulation is performed on the propagation of light from a certain light source, and shadow is added to the light in order to create composite model data 7. The light simulation device of the present invention shown in FIG. 1 is therefore a three-dimensional data generating device.

The following is a detailed description of light simulation processing of the present invention in accordance with a specific example of light simulation for model data.

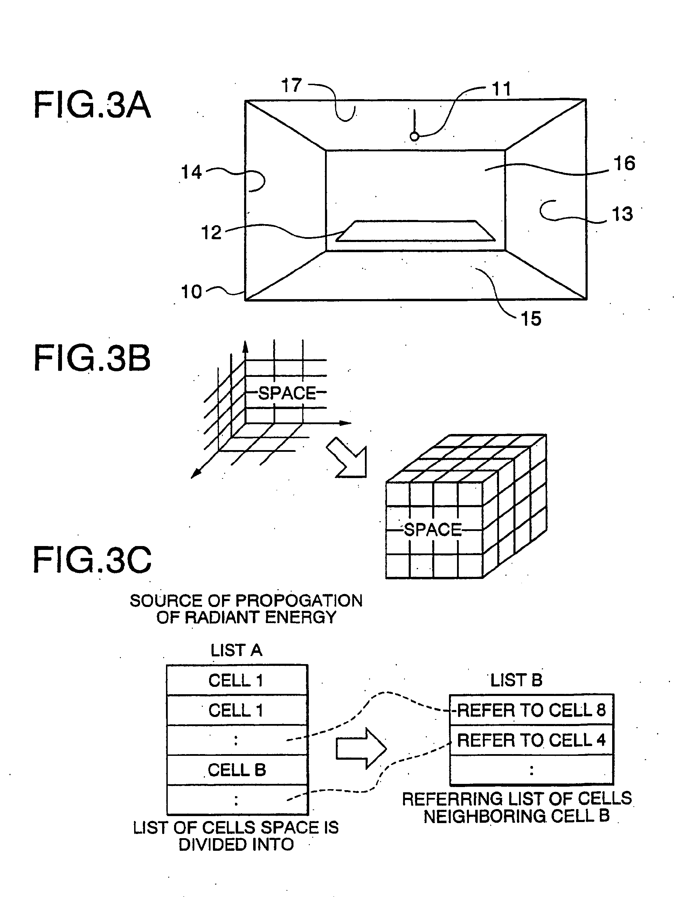

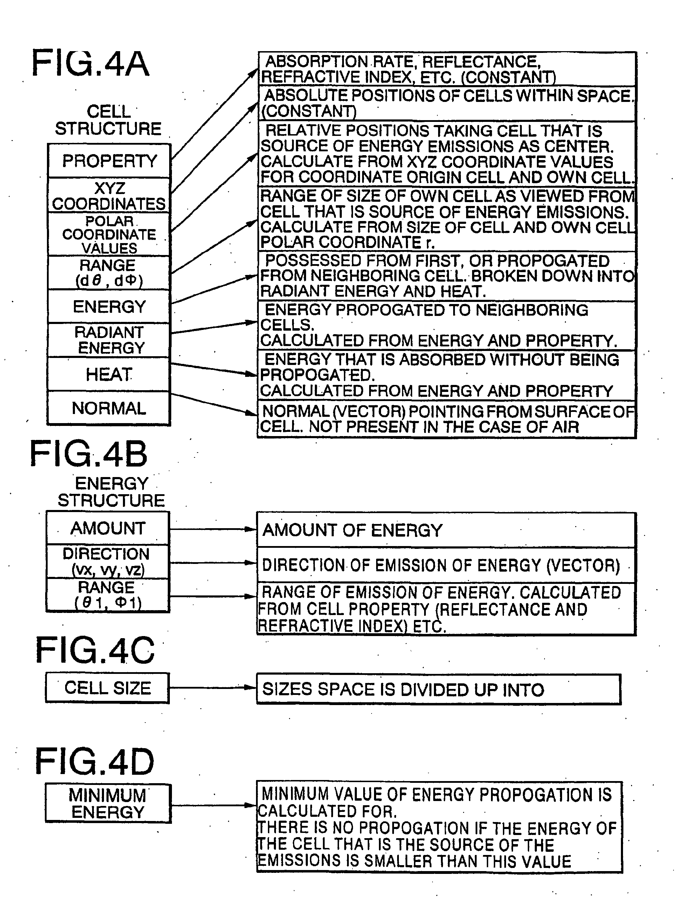

FIG. 3 and FIG. 4 are views illustrating light simulation processing, and show light simulation processing of the present invention.

FIG. 3A shows model data 4, i.e. shape data for space provided as the target of light simulation processing. In FIG. 3A, the space is a single room 10, with the room 10 comprising, for example, a light (light source) 11 providing white light, a plate (hereinafter referred to as table) 12 corresponding to a table, and a red wall 13. The light 11 hangs down slightly at the center of the room 10 from a ceiling 17. The table 12 (for simplicity, the table is taken to have no legs) is taken to float slightly upwards from the floor 15 at the center of the room 10. Only one wall is taken to be red (wall 13) in color differing from the others (the other walls 14 and 16, and the ceiling 17 and floor 15 are white). The spatial distribution of the generated light is represented as being blurred and dimly lit at the periphery of the upper side of the light 11 and at the reverse side, and the upper side periphery of the table 12 and at the reverse side is represented as blurred and bright, with the lower side being dark, and space in the vicinity of the red wall 13 incurring a red impression.

As shown in FIG. 3B, space provided as the target of light simulation processing using the model data 4 is divided into a plurality of cells. As described in the following, the shape of the cell is designated externally by the user. The cell is usually taken to be cubic. Each of the divided cells are assigned a uniquely decided cell number 1, 2, 3, ..., with the cells then being expressed individually using these numbers as "cell #1", etc. "cell #1" is then also the cell name.

As shown in FIG. 3C, the divided cells are then made as a cell structure list (referred to as "list A" in the following). The list A stores the divided cells in a prescribed order. At list A, each cell has the data structure shown in FIG. 4A. Namely, property, XYZ coordinate values, polar coordinate values, range ($d\theta$, $d\phi$), energy, radiant energy, heat (absorbed energy), and normal are stored for each cell (cell number).

The meaning of cell "property" etc. is as shown in FIG. 4A. Namely, "property" refers to attributes that cause the state of the energy to change such as absorption rate of the cell, reflectance, and refractive index (constant). "Normal" refers to a normal (vector) facing in the direction of a surface (plane) made for the cell and doesn't exist when the cell is air. The XYZ coordinate values are absolute values (constants) for the cells in space. The polar coordinate values express relative positions taking the cell that is the source of the energy emission as center and is calculated from XYZ coordinate values for the cell that is the radiant source and the cell itself. The range ($d\theta$, $d\phi$) expresses a range for the own cell as viewed from the cell constituting the source of an energy emission, and is calculated from the size of the cell and polar coordinates r of the own cell. The above decide the conditions for the energy propagation (energy propagation conditions).

In reality, the existence of a normal is decided not by whether a cell is air but rather by whether or not a cell is included in the boundary surface of an object. For example, cells within a thick wall are not air but do not have a normal. The normal is therefore defined (as existing) in list A in cases where the cell includes a boundary with a material and is not defined (deemed not to exist) in cases where the cell is a body continuing on from the surroundings.

Energy is deemed as being possessed from the start or being propagated from a neighboring cell. Energy is broken down into radiant energy and heat (absorbed energy). Radiant energy is energy that is transmitted to neighboring cells, and is calculated based on energy and property. Heat refers to when energy is absorbed by a cell rather than being propagated to another cell and calculated based on energy and property. The above are the energy propagation results (energy propagation information).

The property for the cells can be provided in advance (or beforehand) for all of the cells and can be externally designated by a user. It can then be decided whether a cell is "air" or an "object" using the designated property. Energy of a cell is provided only to cells (i.e. light sources) possessing energy from the beginning and may be designated externally by a user. The position of the light source in the space that is the subject of the processing can be decided using the energy designation.

The XYZ coordinates of each cell can then be decided by deciding the light source of the model data 4. The XYZ coordinate value for the light source is (0, 0, 0). XYZ coordinate values can then be determined for all of the cells within the space targeted for processing in this manner. The XYZ coordinate values for the cell then show the central position of the cell.

The polar coordinate values of a cell constituting the light source can then be determined by deciding upon the light source. Namely, the polar coordinate values for the light source are $(r, \theta, \phi) = (0, \text{arbitrary}, \text{arbitrary})$. Polar coordinate values can then be determined for all of the cells within the space targeted for processing in this manner. The polar coordinate values for the cell then show the central position of the cell.

Further, the normal of a cell can be considered not to exist when the cell is space, and the case where the cell is a medium other than air is therefore considered. Namely, in this example, the propagating energy is light (rectilinear). A cell in this space therefore simply propagates energy only to other cells existing in the direction of propagation of the energy. Cells of mediums other than air propagate energy to other cells through reflection (as well as absorbing energy themselves). Namely, the cell acts as a (simulated) light source with respect to other cells present in the direction of reflection. The normal is important in cases where a cell propagates energy through reflection, i.e. the normal of a cell decides the direction in cases where the cell propagates energy through diffused reflection, with the direction of the normal being particularly important in cases where a cell at a wall surface is at an incline (this is slightly different in the case of reflection at a mirrored surface). If a cell has a normal in the case of diffused reflection, the direction of the energy propagation thereafter loses any meaning, and consequentially, the presence of a normal is given priority over the direction and range of the energy propagation.

Of the cell structure, the energy has a data structure as shown in FIG. 4B, i.e. the amount direction (vx, vy, vz) and range $(\theta 1, \phi 1)$ of each energy is stored for each energy. The amount of the energy expresses the amount of energy. The direction of the energy represents the direction in which the energy is emitted (vector). The range expresses the range with which the energy is radiated and is calculated from the property (reflectance, refractive index) of a cell. The radiant energy also has the same data structure as the energy.

As shown in FIG. 4C, the size of the cell is the size (unit) at which the space is divided up, and this value is externally designated by the user. The cell is usually taken to be a cubic unit size (for example, 1 x 1 x 1). These are the simulation conditions and are externally inputted to the dividing means 1 as with the initial conditions for simulation.

As shown in FIG. 4D, the minimum energy is the minimum value of energy calculated for the propagation, and this value is externally designated by the user. If the amount of energy of a cell constituting a light source is smaller than a minimum value for this energy, this cell is deemed not to transmit energy to other cells from thereon. In reality, when the energy of a cell constituting a light source is smaller than a minimum value for energy, energy propagation is carried out, but in this example this means that processing of the energy propagation is terminated. In this way, simulation is omitted for propagation of energy that is too small to be viewed by the human eye when an image is generated. These are the simulation conditions and are externally inputted to the dividing means 1.

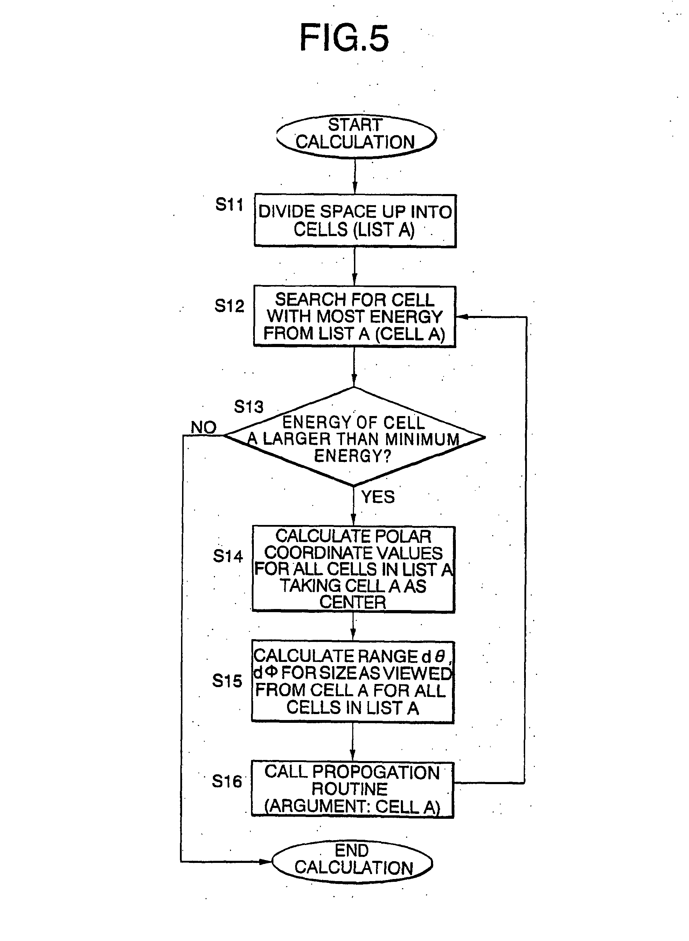

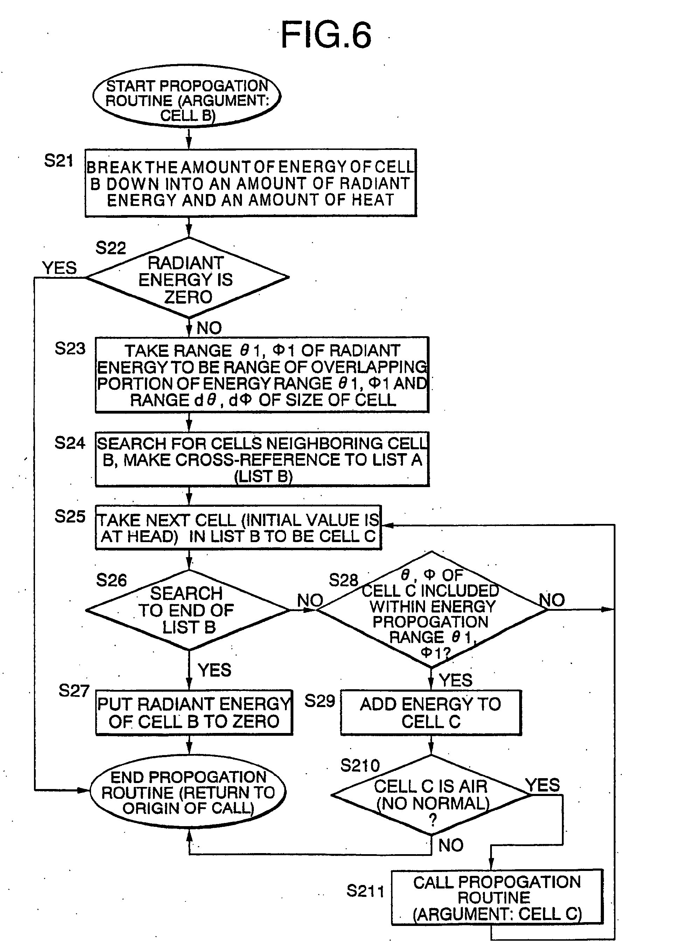

FIG. 5 and FIG. 6 show light simulation processing flowcharts, and show light simulation processing of the present invention.

In FIG. 5, the dividing means 1 divides the provided space up into a plurality of cells based on the model data 4 and calculates xyz coordinates for each cell. These are then stored and an initial cell structure list (list A) 5 is made from the obtained sizes, with these being stored in, for example, order of coordinates, in the list A (step S11). In this process, the dividing means 1 inputs light source energy constituted by initial values for the simulation inputted from outside into the list A.

The dividing means 1 then searches for the cell (taken to be cell A) for which the energy is a maximum by checking the numerical value "amount" for "energy" from list A (step S12). A check is then made as to whether or not the energy of the cell A is larger than the minimum energy as determined in FIG. 4D (step S13), and when this is not the case, the processing ends, i.e. when only cells that already have an energy less than the minimum energy are left.

When the energy is larger than the minimum energy, the dividing means 1 calculates polar coordinate values $(r, \theta, \phi)$ for all of the cells in the list A taking cell A as center (0, 0, 0) (step S14). The range $d\theta, d\phi$ of amount when looking from cell A is calculated (step S15). A propagation routine (propagation means 2) taking an argument as cell A is called (step S16), and a return-await state from the propagation means 2 is entered.

In FIG. 6, when a propagation routine is called by the step S16, the propagation means 2 takes cell A to be cell B and starts the processing (processing shown in FIG. 6) taking cell B as an argument. Namely, the propagation means 2 breaks down the amount of the energy of cell B into an amount of radiant energy and heat (the energy absorbed at the cell) (step S21). A check is then made as to whether or not the radiant energy is "0" (step S22). When this is the case, the processing of the propagation routine is ended and the origin of the call is returned to, i.e. step S16 in FIG. 5 is returned to and step S12 is executed. The same also applies for the following.

When the radiant energy is not zero, the propagation means 2 takes the range $\theta1$, $\phi1$ of the radiant energy to be the range of overlap of the range $\theta1$, $\phi1$ of the energy and the range $d\theta$, $d\phi$ of the size of the cell (step S23). After this, the propagation means 2 searches for cells neighboring cell B, and a cross-reference (list B (second list)) to list A is made (step S24). The next cell (the initial value is the leading cell) of list B is then taken to be cell C (step S25) and a check is made as to whether or not searching has taken place to the end of list B (step S26). When searched, the radiant energy of cell B is put to zero (step S27) and processing of the propagation routine taking cell B as an argument ends.

In step S27, the propagation means 2 takes the (amount of the) radiant energy of the cell B prior to being made zero to be the energy propagation information for this cell and stores this in the energy propagation information list 6. As a result, after this, the generating means 3 generates composite model data 7 reflecting the results of this light simulation based on the model data 4 and the energy propagation information list 6.

When the end is reached with nothing being found, the propagation means 2 checks as to whether or not $\theta$, $\phi$ of cell C are included within energy propagation range $\theta1$, $\phi1$ (step S28). When not included, step S25 onwards are repeated. When included, the propagation means 2 adds energy to cell C (step S29) and checks as to whether or not cell C is air (when a normal does not exist) (step S210). When cell C is not air (when a normal exists), the propagation means 2 ends processing for the propagation routine taking the cell B as an argument. In this case, the cell C is a cell such as the wall 14 etc. propagating energy to other cells through reflection and acts as a (simulated) light source with respect to other cells. When cell C is air (when a normal does not exist), the propagation means 2 calls a propagation routine taking the cell C as an argument (step S211). The same processing as for step S25 onwards is then repeated after this using the called propagation routine.

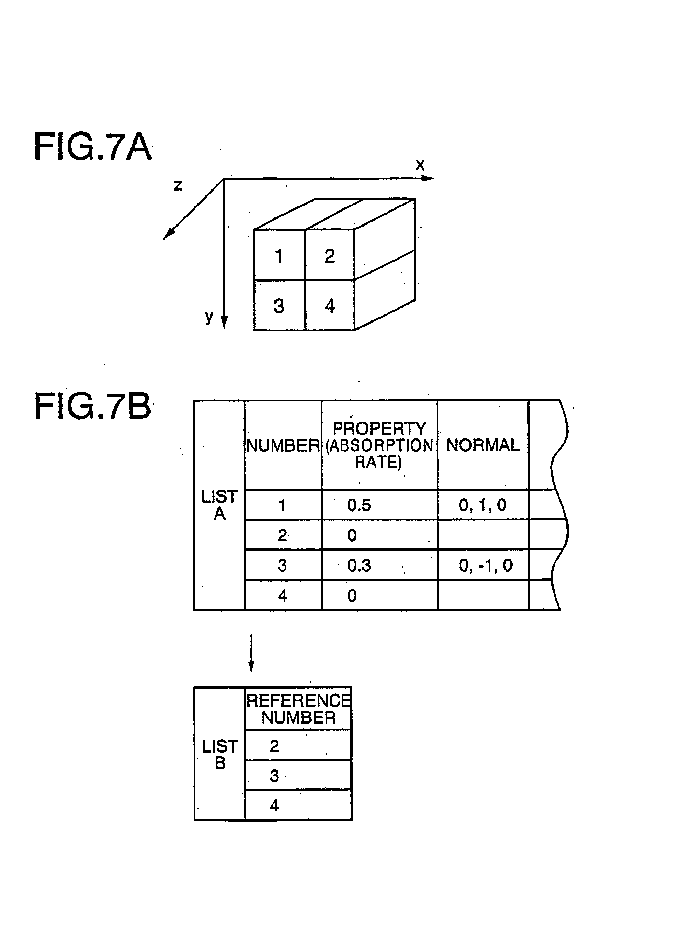

FIG. 7 to FIG. 10 are views illustrating light simulation processing, and show light simulation processing of the present invention.

It is taken that the space shown in FIG. 7A is present. The size of the cell is taken to be 1 x 1 x 1. Cell #1 is taken to be a "body possessing energy", i.e. a "light source" in light simulation. Cell #2 and cell #4 are "empty space", i.e. "air" in light simulation, while cell #3 is an "object" i.e. the "table" in light simulation. The normals then express the direction of the surface of the table etc. In the above, the simplest example is taken for ease of description.

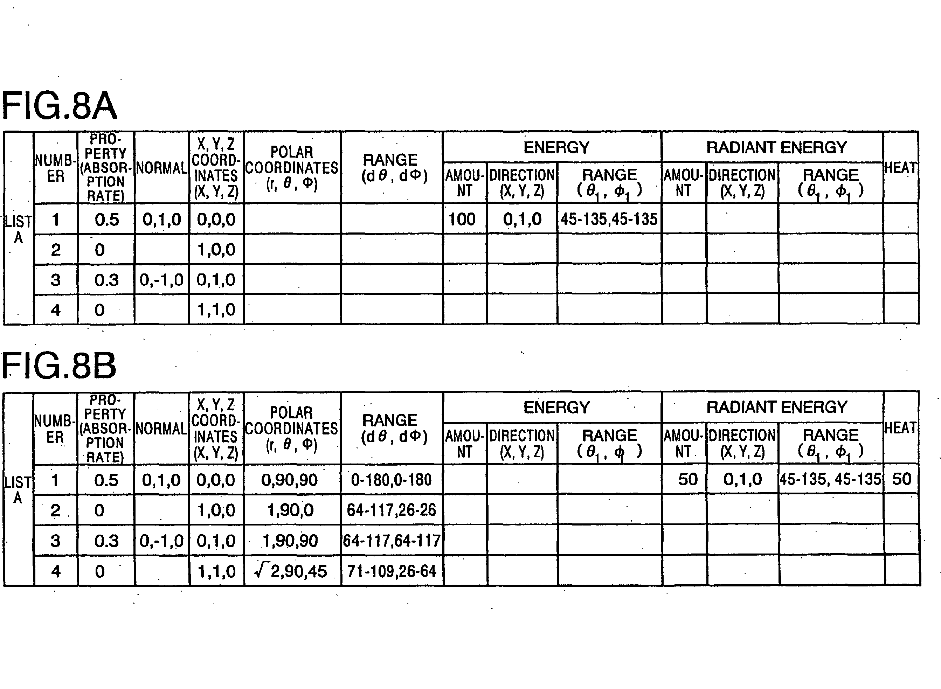

When the space in FIG. 7A is divided up into cells #1 to #4 as described above and a list is made determining the structure of each cell, the list A shown in FIG. 8A is obtained (step S11).

In the list A shown in FIG. 8A, cell #1 is a "body possessing energy" and is therefore pre-assigned a certain energy. Cell #1 is therefore a light source in this example. The energy of the light source is defined by providing the amount "100", direction (x, y, z) = (0, 1, 0), and range ($\theta1$, $\phi1$) = (45 to 135, 45 to 135). Normals exist for cell #1 and cell #3 but do not exist for cell #2 and cell #4 on account of these cells being "air". The direction of propagation of the energy of cell #1 is also shown in its simplest form. Further, in this example, only the absorption rate is provided in advance as a property of the cell #1. This is also in its simplest form as a result of omitting the reflectance and refractive index.

The cell having the greatest energy in the list A is cell #1 and cell #1 is therefore taken as the source of the energy emission (step S12). After this, regarding all of the cells in the list A, polar coordinate values (r, $\theta$, $\phi$) taking cell #1 as center (0, 0, 0) are calculated (step S14). A range $d\theta$, $d\phi$ of a size as viewed from cell #1 is then calculated (step S15). The polar coordinate values (r, $\theta$, $\phi$) are calculated in the following manner. Namely,

$$r^2 = x^2 + y^2 + z^2,$$

$$\tan \theta = (x^2 + y^2)^{1/2} \div z,$$

$$\tan\phi = y \div x.$$

And, the range $d\theta$, $d\phi$ is calculated in the following manner. Namely,

$$d\theta : \theta - \tan^{-1} (((\text{cell size}) \div 2) \div r) \text{ to } \theta + \tan^{-1} (((\text{cell size}) \div 2) \div r),$$

$$d\phi : \phi - \tan^{-1} (((\text{cell size}) \div 2) \div (x^2 + y^2)^{1/2}) \text{ to } \phi + \tan^{-1} (((\text{cell}$$

$$\text{size}) \div 2) \div (x^2 + y^2)^{1/2}).$$

After this, the propagation routine for cell #1 is called (step S16), this processing is started, and energy propagation is calculated. First, the amount of the energy of the cell #1 is broken up into amount of radiant energy and amount of heat (absorbed energy) (step S21). Here,

$$(\text{the amount of the radiant energy}) = (\text{energy amount}) \times (1 - (\text{absorption rate})),$$

$$(\text{heat}) = (\text{amount of energy}) \times (\text{absorption rate}).$$

Next, the range and direction of radiant energy are calculated from the range and direction of the energy of cell #1 (step S23). Here,

$$(\text{range of radiant energy}) = (\text{overlapping portion of cell range and energy range}),$$

$$(\text{direction of radiant energy}) = (\text{direction of energy}).$$

The direction of the radiant energy is actually calculated from the reflectance and the refractive index.
The list A shown in FIG. 8B is then obtained from the above. In the list A of FIG. 8B, the polar coordinate values (r, θ, φ) for all of the cells and the range dθ, dφ (as viewed from cell #1) are obtained, and the radiant energy is obtained for the cell #1. The radiant energy and the thermal energy for the cell #1 are given an amount of "50" as a result of the amount "100" and absorption rate "0.5" in FIG. 8A. The direction and range of the radiant energy is taken to be FIG. 8A. Namely, the range is (θ1=45 to 135, φ1 = 45 to 135), and the direction is (0, 1, 0).
After this, the cell neighboring cell #1 is searched for, and a list (list B) is made for this number (step S24). List B is shown in FIG. 7B. Namely, cells #2 to #4 are neighboring cell #1. The reference numbers of list B indicate the same cell numbers as for list A. After this, individual cells are extracted in order from the head of the list B (step S25, S26), and energy propagation to these cells is checked.
Namely, looking from cell #2 at the head of list B, from list A of FIG. 8B, the polar coordinates of cell #2 are not included in the range of radiant energy of cell #1. Cell #2 is therefore not included in the energy propagation range of cell #1 (step S28) and energy is not propagated to the cell #2. The (energy and) radiant energy of cell #2 occurs in list A is therefore not described.
Looking from the cell #3 that is the second on list B, the polar coordinate is included in the range of the radiant energy of cell #1 (step S28), and energy is propagated (added) to cell #3 (step S29), i.e. the amount, direction and range of energy of cell #3 are obtained. The direction and range obtained are the energy that is to next be emitted from cell #3 (not emitted when all of the energy is absorbed). Namely,

$$(\text{amount of energy of cell #3}) = (\text{amount of radiant energy of cell #1}) \times (((\text{solid angle}$$

$$\text{#1 of the overlapping portion of the range of cell #3 and the range of the radiant energy of}$$

$$\text{cell #1}) \div (\text{solid angle #2 of cell #1})) \div \pi) \times \cos (90 - (\text{polar coordinate } \theta \text{ of cell}$$

$$\text{#3}) = 50 \times ((1.651 \div 1) \div \pi) \times 1 = 26,$$

$$(\text{direction of energy of cell #3}) = (\text{direction of normal of cell #3}) = (0, -1, 0),$$

$$(\text{the range } (\theta, \phi) \text{ of energy of the cell #3}) = 0 \text{ to } 180 \text{ (degrees)}, 0 \text{ to } 180 \text{ (degrees)}.$$

The solid angle #1 is obtained in the following manner. The overlapping portion of the range of the cell #3 and the radiant energy of cell #1 is 64 to 117 for θ, and 64 to 117 for φ, so that

(solid angle #1) = 2π(cos (minimum value of the range of θ of the overlapping

portion) - cos (maximum value of the range of θ of the overlapping portion)) x

((maximum value of the range of φ of overlapping portion) - (minimum value of the

range of overlapping portion φ)) ÷ 180 = 2π(cos 64 - cos117) x (117 - 64) ÷ 180 =

1.651.

The solid angle #2 can be obtained from the following. Namely,

(solid angle #2) = (cos(minimum value of the range) - cos(maximum value of the

range)) x ((maximum value of the range) - (minimum value of the range)).

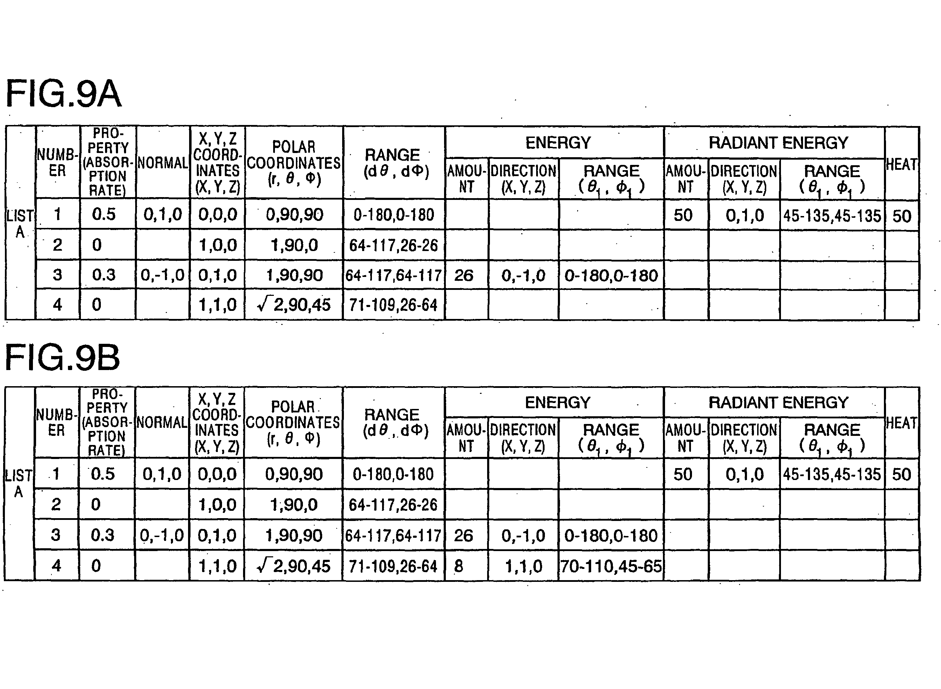

In the case of a light source (with polar coordinate r=0), the solid angle is taken to be "1". Further, the deciding of the direction and range of the energy in the above manner is for in cases where the destination of the propagated energy is a body (anything other than air) and in cases of diffused reflection. In diffused reflection, the energy is emitted in a half space ( θ, φ) = (0 to 180, 0 to 180) on the normal side of the surface.
As a result, as shown in FIG. 9 A, energy propagated to cell #3 can be obtained from list A. Since a normal exists at cell #3, energy propagation due to this propagation path ends here (in the case of a transparent body such as glass etc., further propagation is carried out), i.e. there is no propagation of energy to other cells due to this propagation path. Energy propagated to the cell #3 (amount of energy) is then propagated to other cells through reflection with propagation routines taking the cell #3 as a light source. The amount of energy propagated to other cells is therefore expressed by the extent to which a wall 14 etc. that is the cell #3 is lit up by a light source (reflects) so as to become bright. At this time, the direction and range of the energy is such that the energy is uniformly reflected (diffused reflection) in all direction of the half space in the direction of the normal because cell #3 is a diffused reflecting body.
When the cell #3 is not a body (is air), the amount of energy is the same as above. That is,

(direction of energy of cell #3) = (direction from light source to cell #3),

(the range of energy of the cell #3) = (the overlapping portion of the range of the cell #3 and the radiant energy of cell #1),

i.e. energy propagated from cell #1 is propagated without changing direction and range.
Looking from the cell #4 that is the third on list B, based from the list A in FIG. 8B, cell #4 is included in the range of propagation of the energy of cell #1 (step S28), and energy is propagated (added) to cell #4 (step S29).Namely,

(amount of energy of cell #4) = (amount of radiant energy of cell #1) x (((solid angle

#3 of the overlapping portion of the range of cell #4 and the range of the radiant energy of

cell #1) ÷ (solid angle #2 of cell #1)) ÷ π) x cos (90 - (polar coordinate θ of cell

#4)) = 50 x ((0.478 ÷ 1) ÷ π) x 1 = 7.8 ≒ 8,

(direction of energy of cell #4) = (direction from light source to cell #4) = (1, 1, 0),

(the range (θ, φ) of energy of the cell #4) = (the overlapping portion of the range of the cell #4 and the radiant energy of cell #1) = (70 to 110, 45 to 65).

Here, the solid angle #3 is obtained in the following manner. The overlapping portion of the range of the cell #4 and the radiant energy of cell #1 is 70 to 110 for $\theta$, and 45 to 65 for $\phi$, so that

$$(\text{solid angle \#3}) = 2\pi(\cos \text{ (minimum value of the range of } \theta \text{ of the overlapping}$$

$$\text{portion) - cos (maximum value of the range of } \theta \text{ of the overlapping portion)) x}$$

$$((\text{maximum value of the range of } \phi \text{ of the overlapping portion) - (minimum value of the}$$

$$\text{range of the overlapping portion } \phi)) \div 180 = 2\,\pi(\cos 70 - \cos 110) \text{ x } (65 - 45) \div 180$$

$$= 0.478.$$

The solid angle #2 is the same as described above. Further, the deciding of the direction and range of the energy in the above manner is for in cases where the destination of the propagated energy is air. As a result, as shown in FIG. 9B, energy propagated to cell #4 can be obtained from list A.

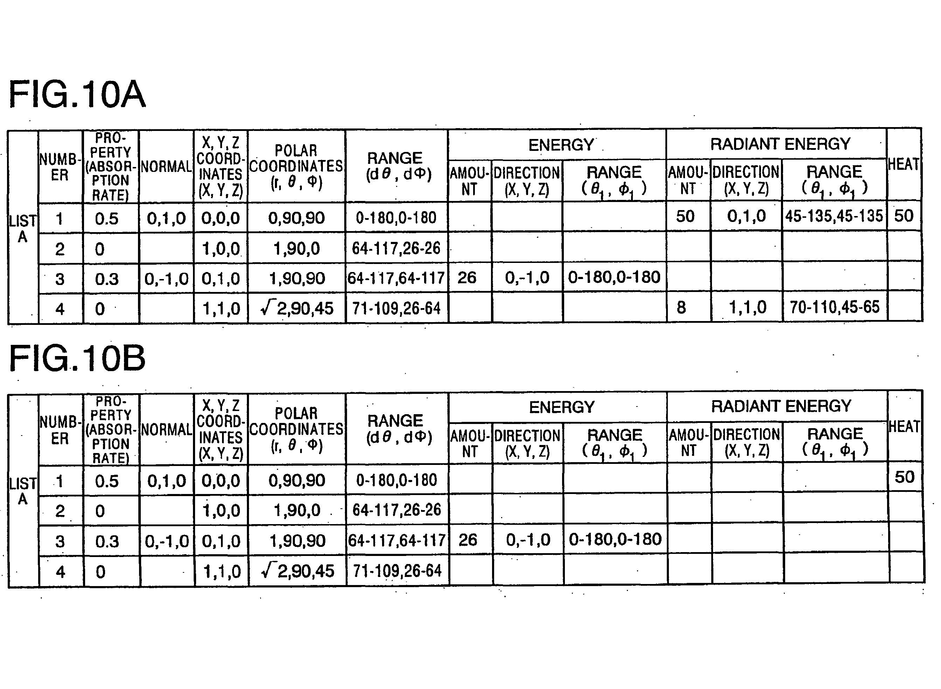

Processing for the propagation routine for cell #4 is started (step S211), and energy propagation is calculated. First, the amount of the energy of cell #4 is broken up into an amount of radiant energy and amount of heat (step S21). In either case, calculation is performed as described above, the amount of radiant energy is "8", and the amount of heat is "0". Next, the range and direction of radiant energy are calculated from the range and direction of the energy of cell #4 (step S23). In any case, calculation is performed as described above, the amount of radiant energy is $(\theta, \phi)$ = (70 to 110, 45 to 65), and the direction is (1, 1, 0). The list A shown in FIG. 10A is then obtained from the above. In list A in FIG. 10A, radiant energy is obtained for cell #4.

After this, propagation energy of an amount "8" exists at cell #4, and energy propagated from cell #4 for this radiant energy to other cells is calculated. However, in the case of this example, the number of cells is limited in order to simplify the explanation and the cell #4 therefore does not transmit energy to other cells. Accordingly, processing is complete up to the end of the list of cells neighboring the cell #4, the radiant energy of cell #4 is put to zero, and the processing of the propagation routine is ended for cell #4. For example, this radiant energy is emitted to outside of the system.

In reality, the number of cells is increased (the cell size is made extremely small), a list is made, and energy propagation is then calculated in the same way by continuing processing for the propagation routine for cell #4 based on this list.

In the above, processing to the end of list B in FIG. 7B is completed (step S26), and the radiant energy of cell #1 that is the cell A is taken to be 0 (step S27). As a result, list A of FIG. 10B is obtained. According to this, it is shown that energy provided initially to the cell #1 at an amount "100" is propagated to the cell #1 as the heat which amount is "50", and to the cell #3 as the energy (light) which amount is "26". Composite model data 7 can easily be obtained by storing list A of FIG. 10B (items of cell number, energy, radiant energy, heat) in the energy transmission information list 6 (step S27) and then combining this with the model data 4.

Next, the propagation routine taking cell B as an argument is ended, step S16 is returned to. Thus, the cell #3 is selected as the cell of the maximum energy from list A (step S12), and the same processing as described above is then carried out taking cell #3 as cell A. In this manner, energy propagation provided from cell #1 to cell #3 provided at an amount "26" can be investigated. Namely, energy propagated to the cell #3 is then propagated to other cells such as, (for example, cell #4) through reflection with propagation routines taking the cell #3 as a light source.

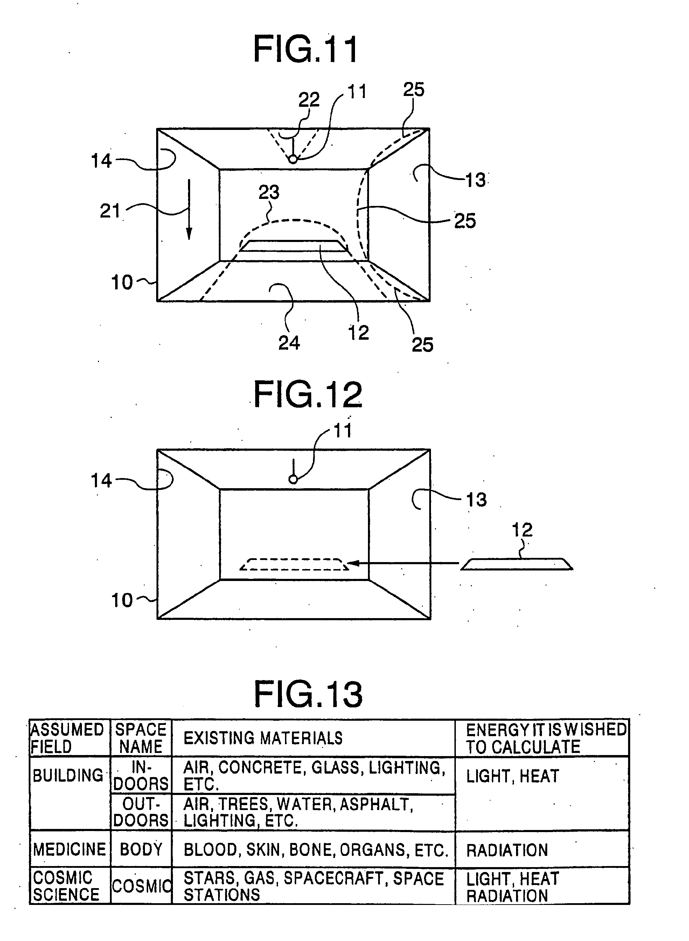

FIG. 11 is view illustrating composite model data, and shows an outline of three-dimensional composite model data 7 generated by the present invention.

The generating means 3 then combines the energy propagation information for each of the plurality of cells obtained by processing the same as that described above and the model data 4 of FIG. 3A, and the composite model data 7 shown in FIG. 11 is obtained. Cells that are air only propagate energy to other cells. Therefore, regarding energy propagation information stored in the energy propagation information list 6, energy provided to a cell constituting the wall 14 etc. is expressed as the brightness (luminance of color) of the corresponding wall surface.

In FIG. 11, energy reaching the wall 14 (energy per cell) gradually reduces with distance from the light 11 constituting the light source. As shown by the arrow 21, the light 11 gives off white light and the wall 14 is white (the red wall 13 is described later), and the brightness of the wall 14 is therefore expressed as becoming gradually darker further downwards. Next, energy from the wall 14 constituting the simulated light source is emitted in all directions of the half-space on the side of the normal of the wall 14. Part of this energy then reaches the side surface and rear surface of the light 11 due to repeated reflections. As a result, the surroundings of the upper side of the light 11 and the rear side region 22 is not completely dark but is instead just slightly dark. Cells at the upper surface of the table 12 act as simulated light sources as described above and the upper side of the table 12 and the surrounding region 23 are lit up in a blurred manner. On the other hand, a small amount of light also reaches cells at the lower side of the table 12 as a result of repeated reflections at the wall 14 and the lower side of the table 12 and surrounding region 24 are therefore dark, but not completely dark.

Further, only one of the walls 14 of the room 10 is a red wall 13 that is a different color to the other walls (white). As described above, a certain amount of energy is provided to the walls 14. At list A in this case, the absorption rate is set to be higher for light of wavelengths other than for red as a property of cells at the red wall 13. Namely, the visible light is expressed broken down into the three primary colors of R (light of a red wavelength), G (light of a green wavelength), and B (light of a blue wavelength), and the actual absorption rate is defined for each of RGB in the list A. Specifically, a low absorption rate is set for R and a high absorption rate is set for G and B (this may also be considered as a high reflectance for R, and a low reflectance with regards to G and B). As a result, R is reflected to a great extent, and the extent by which G and B are reflected is low by comparison. Energy taking the red wall 13 as a simulated light source is emitted at the half-space on the side of the normal of the red wall 13 and is expressed with the space 25 in the vicinity of the red wall 13 incurring a red impression.

When a mirror is hung on the wall 14, the cells at this mirror constitute a mirrored surface. Two types of reflectance are defined as reflectance at the list A, reflectance for the case of diffused reflections normally applied to cells such as those at the wall 14, and reflectance for the case of mirror reflections applied to cells such as for mirrored surfaces or polished surfaces. With diffused reflections, reflections take place uniformly in all directions of the half-space on the normal side of the surface. With mirrored surface reflections, the direction of emission of the energy (outgoing angle or emission angle) depends on the angle of incidence of the energy such as light, etc. In both cases, there are no differences in the amount of energy of the cells but the direction of propagation of the energy differs.

FIG. 11 shows composite model data 7 as displayed as an image on a two-dimensional screen (of a display device). In reality, the composite model data 7 is composed of energy for light emitted for each cell, i.e. the composite model data 7 is composed of data expressing brightness (intensity of light) for each wavelength of a cell and the model data 4 based on the shape and property of the surface, etc. The image displayed on a two-dimensional screen shown in FIG. 11 can therefore be obtained by putting the three-dimensional composite model data 7 (model data including the intensity of light at each location of the model) of the present invention into the form of a picture using well-known three-dimensional CG processing technology. In this case, the propagation of light from the light source is already simulated, with the difference from the related art being that data for the light source is not necessary, i.e. an image can be obtained by providing composite model data 7 as input to three-dimensional CG processing.

In the above, a description is given of practical implementations of the present invention but the present invention is by no means limited in this respect, and various modifications are possible within the scope of the present invention.

For example, the light simulation of the present invention can also be made compatible with relatively short time periods by partially changing conditions after carrying out simulation once. As shown in FIG. 12, simulation is carried out once with the model data 4 while excluding the table 12 in FIG. 3A. At this time, energy propagation information is obtained for each cell in the energy transmission information list 6. The table 12 is then inserted into the space in this state. In this case, partial simulation can be carried out in a relatively short period of time without redoing the simulation from the start and new composite model data 7 (hereinafter referred to as 7') can be obtained.

In this case, a cell newly taken to be the table 12 is specified from the new position of the table 12 and energy propagation information for this cells is read out from the energy propagation information list 6. For example, propagation of energy for the cell onwards (the lower side of the table 12) is obtained using the read-out energy propagation information and is subtracted from the values for the energy propagation information for each cell corresponding to the values. As a result, propagation of energy from the light source to the cells at the lower side of the table 12 is no longer present and the lower side of the table 12 becomes darker for the composite model data 7' than for the composite model data 7. However, propagation of energy due to reflections from the wall 14 remains and the lower side of the table 12 and the surroundings are just dark rather than completely dark. On the other hand, propagation of energy to the upper side of the table 12 is obtained and added to the energy propagation information values for each cell for these values. Light due to reflections from the table 12 is therefore applied to each of the cells for the upper side of the table in addition to light from the light source, so as to be represented more brightly for the composite model data 7' than for the composite model data 7. The same results as for FIG. 11 can therefore be obtained in a relatively short period of time.

The present invention is by no means limited to applications where the energy propagated by a medium is visible light but, as shown in FIG. 13, may also be applied to simulation of propagation in cases where this energy is radio frequency electromagnetic waves, microwaves, heat (infra-red rays), X-rays, gamma rays, and other electromagnetic waves. In the above description, light may be taken as the electromagnetic radiation, and a light source may be taken to be the source emitting electromagnetic waves.

Looking from the point of view of taking a building as the energy propagating medium it is wished to make calculations for, then the calculations may be for light (visible light) or heat. The environment can therefore be known in detail by knowing the light and heat propagated by air occurring "inside a room" taken as a space and concrete etc., and air, trees and water "outside a room" taken as a space. For example, the state of light in courtyards or parks may be known to meet the demands of actual shapes. Further, the situation for regarding the accumulation of heat in concrete may be known to meet the demands of actual shapes. Electromagnetic waves (in particular, infrared rays, X-rays and gamma rays) exist in the medical field. Namely, by knowing the energy propagated by blood and organs etc. of a "person's body" taken as the space, the influence of this can be known in great detail. It is also therefore possible to know in what manner to provide irradiation with magnetic waves during treatment as a result of being aware of propagation of electromagnetic waves within the body. For example, accurate simulation is possible by appropriately setting the absorption rate of veins, bone, and muscle. Regarding the field of cosmic science, the present invention can also be applied to a spaceship or electromagnetic rays of a broad range of wavelengths exist. The composition and structure etc. of satellites can therefore be estimated by being aware of the propagation of energy in satellites and space stations, etc. The influence of a human body within a base can also be known in detail.

INDUSTRIAL APPLICABILITY

As described above, in the electromagnetic wave simulation device and method according to the present invention, by obtaining energy propagation information for each cell of the plurality of cells by only carrying out energy propagation between neighboring cells, it is possible to achieve completion by carrying out calculations for energy transmission on a limited number of cells, and a range of cells neighboring these cells. Simulation of energy distribution of electromagnetic waves such as light etc. can therefore be carried out in a relatively short period of time even when the size of the cells is made extremely small and the number of cells is increased in order to raise simulation precision. In addition to the above, propagation can be handled as propagation at polished and mirrored surfaces with increased realism by limiting by putting various propagation conditions on propagation of energy between neighboring cells. Simulation of energy distribution of electromagnetic waves such as light etc. can therefore be carried out at relatively high speed.

According to the present invention, with this three-dimensional model data generating device, composite model data for use in three-dimensional CG processing generating images can be obtained by combining the propagation information for the energy of each cell of the plurality of cells obtained at relatively high-speed as described above and the model data. An image can then be made in half the time or less when compared to the radiocity and Monte Carlo Methods when carrying out three-dimensional processing using this composite model data. In addition to the above, propagation can be handled as propagation at polished and mirrored surfaces with increased realism by limiting by putting various propagation conditions on propagation of energy between neighboring cells so that simulation precision can be improved and more realistic images can be made.

**Claims**

1. An electromagnetic wave simulation device comprising:

   dividing means for dividing space where three-dimensional model data exists into a plurality of cells; and
   propagation means for generating propagation information for energy of electromagnetic waves for between a cell and other neighboring cells in accordance with electromagnetic wave energy propagation conditions for the cell for each of the plurality of cells.

2. An electromagnetic simulation device according to claim 1, wherein the electromagnetic waves are visible light, and the three-dimensional model data is used in three-dimensional computer graphics processing to generate an image.

3. An electromagnetic simulation device according to claim 1, wherein the position of each cell of the plurality of cells is expressed by XYZ coordinate values expressing absolute position in the space, and polar coordinate values expressing relative position taking a cell constituting a source of electromagnetic wave emissions as a point of origin.

4. An electromagnetic wave simulation device according to claim 3, wherein energy propagated from a cell that is a source of electromagnetic wave emissions to another cell is propagated only for a range where a range for the energy and a range of size of the cells overlaps each other, both being expressed by the polar coordinates.

5. An electromagnetic simulation device according to claim 3, wherein the energy is expressed by an amount expressing amount of energy, a propagation direction expressing a direction of emission of the energy, and a propagation range expressing a range of radiation of the energy expressed by the polar coordinates.

6. An electromagnetic wave simulation device according to claim 1, further comprising:

   a first list storing propagation conditions for energy for each cell of the plurality of cells and energy propagation results.

7. An electromagnetic wave simulation device according to claim 6, wherein the first list stores property, normal, XYZ coordinate values, polar coordinate values, and a cell size range as the propagation conditions for the energy for each cell, and stores energy, radiant energy and heat as the propagation results for the energy.

8. An electromagnetic wave simulation device according to claim 7, wherein the property is cell absorption rate, reflectance, and refractive index.

9. An electromagnetic wave simulation device according to claim 7, wherein the normal is defined in a case that the cell includes a boundary with a material, and does not exist in a case that the cell is a material continuing on from a boundary.

10. An electromagnetic wave simulation device according to claim 9, wherein propagation in the direction from the energy source is halted I a case that the energy reaches a cell constituted by a reflective material, and energy is propagated anew to a further cell taking the cell as a simulated electromagnetic wave emission source.

11. An electromagnetic wave simulation device according to claim 6, further comprising:

   a second list storing propagation information for energy for each cell of the plurality of cells for each of the cells.

12. An electromagnetic wave simulation device according to claim 1, wherein energy of a cell constituting the electromagnetic wave emission source is designated as an initial value for simulation.

13. An electromagnetic simulation device according to claim 1, wherein the size of the cell is designated as the simulation conditions.

14. An electromagnetic wave simulation device according to claim 1, wherein a minimum energy is designated as the simulation conditions, and simulation is not carried out in a case that the cell energy is smaller than the minimum energy.

15. An electromagnetic wave simulation method comprising:

   dividing three-dimensional space where model data exists into a plurality of cells; and
   generating propagation information for energy for between a cell and other neighboring cells in accordance with energy propagation conditions for the cells for each cell of the plurality of cells.

16. A three-dimensional modal data generating device comprising:

   dividing means for dividing space where three-dimensional model data exists into a plurality of cells;
   propagation means for generating propagation information for energy of electromagnetic waves for between a cell and other neighboring cells in accordance with electromagnetic wave energy propagation conditions for the cell for each of the plurality of cells; and
   generating means for generating three-dimensional modal data taking into consideration propagation of electromagnetic wave energy in the space by combining the three-dimensional model data and propagation information for energy of electromagnetic for each cell of the plurality of cells obtained by the propagation means.

17. A three-dimensional modal data generating device according to claim 16, wherein the electromagnetic waves are visible light, and the three-dimensional model data is used in three-dimensional computer graphics processing to generate an image.

# FIG.1

FIG.2A

FIG.2B

# FIG.3A

17    11

14

16

13

12

10

15

# FIG.3B

SPACE

SPACE

# FIG.3C

SOURCE OF PROPOGATION
OF RADIANT ENERGY

LIST A

| CELL 1 |
| CELL 1 |
| : |
| CELL B |
| : |

LIST OF CELLS SPACE IS
DIVIDED INTO

LIST B

| REFER TO CELL 8 |
| REFER TO CELL 4 |
| : |

REFERRING LIST OF CELLS
NEIGHBORING CELL B

# FIG.4A

CELL STRUCTURE

| | |
|---|---|
| PROPERTY | ABSORPTION RATE, REFLECTANCE, REFRACTIVE INDEX, ETC. (CONSTANT) |
| XYZ COORDINATES | ABSOLUTE POSITIONS OF CELLS WITHIN SPACE. (CONSTANT) |
| POLAR COORDINATE VALUES | RELATIVE POSITIONS TAKING CELL THAT IS SOURCE OF ENERGY EMISSIONS AS CENTER. CALCULATE FROM XYZ COORDINATE VALUES FOR COORDINATE ORIGIN CELL AND OWN CELL. |
| RANGE (d$\theta$, d$\Phi$) | RANGE OF SIZE OF OWN CELL AS VIEWED FROM CELL THAT IS SOURCE OF ENERGY EMISSIONS. CALCULATE FROM SIZE OF CELL AND OWN CELL POLAR COORDINATE r. |
| ENERGY | POSSESSED FROM FIRST, OR PROPOGATED FROM NEIGHBORING CELL. BROKEN DOWN INTO RADIANT ENERGY AND HEAT. |
| RADIANT ENERGY | ENERGY PROPOGATED TO NEIGHBORING CELLS. CALCULATED FROM ENERGY AND PROPERTY. |
| HEAT | ENERGY THAT IS ABSORBED WITHOUT BEING PROPOGATED. CALCULATED FROM ENERGY AND PROPERTY |
| NORMAL | NORMAL (VECTOR) POINTING FROM SURFACE OF CELL. NOT PRESENT IN THE CASE OF AIR |

# FIG.4B

ENERGY STRUCTURE

| | |
|---|---|
| AMOUNT | AMOUNT OF ENERGY |
| DIRECTION (vx, vy, vz) | DIRECTION OF EMISSION OF ENERGY (VECTOR) |
| RANGE ($\theta$1, $\Phi$1) | RANGE OF EMISSION OF ENERGY. CALCULATED FROM CELL PROPERTY (REFLECTANCE AND REFRACTIVE INDEX) ETC. |

# FIG.4C

| | |
|---|---|
| CELL SIZE | SIZES SPACE IS DIVIDED UP INTO |

# FIG.4D

| | |
|---|---|
| MINIMUM ENERGY | MINIMUM VALUE OF ENERGY PROPOGATION IS CALCULATED FOR. THERE IS NO PROPOGATION IF THE ENERGY OF THE CELL THAT IS THE SOURCE OF THE EMISSIONS IS SMALLER THAN THIS VALUE |

# FIG.5

START
CALCULATION

S11 | DIVIDE SPACE UP INTO
CELLS (LIST A)

S12 | SEARCH FOR CELL
WITH MOST ENERGY
FROM LIST A (CELL A)

S13
NO — ENERGY OF CELL
A LARGER THAN MINIMUM
ENERGY?

YES

S14 | CALCULATE POLAR
COORDINATE VALUES
FOR ALL CELLS IN LIST A
TAKING CELL A AS
CENTER

S15 | CALCULATE RANGE $d\theta$,
$d\Phi$ FOR SIZE AS VIEWED
FROM CELL A FOR ALL
CELLS IN LIST A

S16 | CALL PROPOGATION
ROUTINE
(ARGUMENT: CELL A)

END
CALCULATION

# FIG.6

START PROPOGATION
ROUTINE (ARGUMENT:
CELL B)

S21 — BREAK THE AMOUNT OF ENERGY OF CELL B DOWN INTO AN AMOUNT OF RADIANT ENERGY AND AN AMOUNT OF HEAT

S22 — RADIANT ENERGY IS ZERO

YES

NO

S23 — TAKE RANGE $\theta 1$, $\Phi 1$ OF RADIANT ENERGY TO BE RANGE OF OVERLAPPING PORTION OF ENERGY RANGE $\theta 1$, $\Phi 1$ AND RANGE d$\theta$, d$\Phi$ OF SIZE OF CELL

S24 — SEARCH FOR CELLS NEIGHBORING CELL B, MAKE CROSS-REFERENCE TO LIST A (LIST B)

S25 — TAKE NEXT CELL (INITIAL VALUE IS AT HEAD) IN LIST B TO BE CELL C

S26 — SEARCH TO END OF LIST B

NO

S28 — $\theta$, $\Phi$ OF CELL C INCLUDED WITHIN ENERGY PROPOGATION RANGE $\theta 1$, $\Phi 1$?

NO

YES

YES

S27 — PUT RADIANT ENERGY OF CELL B TO ZERO

S29 — ADD ENERGY TO CELL C

END PROPOGATION ROUTINE (RETURN TO ORIGIN OF CALL)

S210 — CELL C IS AIR (NO NORMAL) ?

YES

NO

S211 — CALL PROPOGATION ROUTINE (ARGUMENT: CELL C)

# FIG.7A

# FIG.7B

| | NUMBER | PROPERTY (ABSORPTION RATE) | NORMAL | |
|---|---|---|---|---|
| LIST A | 1 | 0.5 | 0, 1, 0 | |
| | 2 | 0 | | |
| | 3 | 0.3 | 0, -1, 0 | |
| | 4 | 0 | | |

| | REFERENCE NUMBER |
|---|---|
| LIST B | 2 |
| | 3 |
| | 4 |

# FIG.8A

| | NUMBER | PROPERTY (ABSORPTION RATE) | NORMAL | X,Y,Z COORDINATES (X,Y,Z) | POLAR COORDINATES (r, θ, Φ) | RANGE (dθ, dΦ) | ENERGY | | | RADIANT ENERGY | | | HEAT |
|---|---|---|---|---|---|---|---|---|---|---|---|---|---|
| | | | | | | | AMOUNT | DIRECTION (X,Y,Z) | RANGE ($\theta_1$, $\phi_1$) | AMOUNT | DIRECTION (X,Y,Z) | RANGE ($\theta_1$, $\phi_1$) | |
| LIST A | 1 | 0.5 | 0,1,0 | 0,0,0 | | | 100 | 0,1,0 | 45-135,45-135 | | | | |
| | 2 | 0 | | 1,0,0 | | | | | | | | | |
| | 3 | 0.3 | 0,-1,0 | 0,1,0 | | | | | | | | | |
| | 4 | 0 | | 1,1,0 | | | | | | | | | |

# FIG.8B

| | NUMBER | PROPERTY (ABSORPTION RATE) | NORMAL | X,Y,Z COORDINATES (X,Y,Z) | POLAR COORDINATES (r, θ, Φ) | RANGE (dθ, dΦ) | ENERGY | | | RADIANT ENERGY | | | HEAT |
|---|---|---|---|---|---|---|---|---|---|---|---|---|---|
| | | | | | | | AMOUNT | DIRECTION (X,Y,Z) | RANGE ($\theta_1$, $\phi$) | AMOUNT | DIRECTION (X,Y,Z) | RANGE ($\theta_1$, $\phi_1$) | |
| LIST A | 1 | 0.5 | 0,1,0 | 0,0,0 | 0,90,90 | 0-180,0-180 | | | | 50 | 0,1,0 | 45-135, 45-135 | 50 |
| | 2 | 0 | | 1,0,0 | 1,90,0 | 64-117,26-26 | | | | | | | |
| | 3 | 0.3 | 0,-1,0 | 0,1,0 | 1,90,90 | 64-117,64-117 | | | | | | | |
| | 4 | 0 | | 1,1,0 | $\sqrt{2}$,90,45 | 71-109,26-64 | | | | | | | |

EP 1 387 322 A1

# FIG.9A

| | NUMB-ER | PRO-PERTY (ABSOR-PTION RATE) | NORMAL | X,Y,Z COORD-INATES (X,Y,Z) | POLAR COORDINATES (r, $\theta$, $\Phi$) | RANGE (d$\theta$, d$\Phi$) | ENERGY | | | RADIANT ENERGY | | | HEAT |
|---|---|---|---|---|---|---|---|---|---|---|---|---|---|
| | | | | | | | AMOU-NT | DIRECTION (X,Y,Z) | RANGE ($\theta_1$, $\phi_1$) | AMOU-NT | DIRECTION (X,Y,Z) | RANGE ($\theta_1$, $\phi_1$) | |
| LIST A | 1 | 0.5 | 0,1,0 | 0,0,0 | 0,90,90 | 0-180,0-180 | | | | 50 | 0,1,0 | 45-135,45-135 | 50 |
| | 2 | 0 | | 1,0,0 | 1,90,0 | 64-117,26-26 | | | | | | | |
| | 3 | 0.3 | 0,-1,0 | 0,1,0 | 1,90,90 | 64-117,64-117 | 26 | 0,-1,0 | 0-180,0-180 | | | | |
| | 4 | 0 | | 1,1,0 | $\sqrt{2}$,90,45 | 71-109,26-64 | | | | | | | |

# FIG.9B

| | NUMB-ER | PRO-PERTY (ABSOR-PTION RATE) | NORMAL | X,Y,Z COORD-INATES (X,Y,Z) | POLAR COORDINATES (r, $\theta$, $\Phi$) | RANGE (d$\theta$, d$\Phi$) | ENERGY | | | RADIANT ENERGY | | | HEAT |
|---|---|---|---|---|---|---|---|---|---|---|---|---|---|
| | | | | | | | AMOU-NT | DIRECTION (X,Y,Z) | RANGE ($\theta_1$, $\phi_1$) | AMOU-NT | DIRECTION (X,Y,Z) | RANGE ($\theta_1$, $\phi_1$) | |
| LIST A | 1 | 0.5 | 0,1,0 | 0,0,0 | 0,90,90 | 0-180,0-180 | | | | 50 | 0,1,0 | 45-135,45-135 | 50 |
| | 2 | 0 | | 1,0,0 | 1,90,0 | 64-117,26-26 | | | | | | | |
| | 3 | 0.3 | 0,-1,0 | 0,1,0 | 1,90,90 | 64-117,64-117 | 26 | 0,-1,0 | 0-180,0-180 | | | | |
| | 4 | 0 | | 1,1,0 | $\sqrt{2}$,90,45 | 71-109,26-64 | 8 | 1,1,0 | 70-110,45-65 | | | | |

EP 1 387 322 A1

# FIG.10A

| LIST A | NUMB-ER | PRO-PERTY (ABSOR-PTION RATE) | NORMAL | X,Y,Z COORD-INATES (X,Y,Z) | POLAR COORDINATES $(r, \theta, \phi)$ | RANGE $(d\theta, d\Phi)$ | ENERGY | | | RADIANT ENERGY | | | HEAT |
|---|---|---|---|---|---|---|---|---|---|---|---|---|---|
| | | | | | | | AMOU-NT | DIRECTION (X,Y,Z) | RANGE $(\theta_1, \phi_1)$ | AMOU-NT | DIRECTION (X,Y,Z) | RANGE $(\theta_1, \phi_1)$ | |
| | 1 | 0.5 | 0,1,0 | 0,0,0 | 0,90,90 | 0-180,0-180 | | | | 50 | 0,1,0 | 45-135,45-135 | 50 |
| | 2 | 0 | | 1,0,0 | 1,90,0 | 64-117,26-26 | | | | | | | |
| | 3 | 0.3 | 0,-1,0 | 0,1,0 | 1,90,90 | 64-117,64-117 | 26 | 0,-1,0 | 0-180,0-180 | | | | |
| | 4 | 0 | | 1,1,0 | $\sqrt{2}$,90,45 | 71-109,26-64 | | | | 8 | 1,1,0 | 70-110,45-65 | |

# FIG.10B

| LIST A | NUMB-ER | PRO-PERTY (ABSOR-PTION RATE) | NORMAL | X,Y,Z COORD-INATES (X,Y,Z) | POLAR COORDINATES $(r, \theta, \phi)$ | RANGE $(d\theta, d\Phi)$ | ENERGY | | | RADIANT ENERGY | | | HEAT |
|---|---|---|---|---|---|---|---|---|---|---|---|---|---|
| | | | | | | | AMOU-NT | DIRECTION (X,Y,Z) | RANGE $(\theta_1, \phi_1)$ | AMOU-NT | DIRECTION (X,Y,Z) | RANGE $(\theta_1, \phi_1)$ | |
| | 1 | 0.5 | 0,1,0 | 0,0,0 | 0,90,90 | 0-180,0-180 | | | | | | | 50 |
| | 2 | 0 | | 1,0,0 | 1,90,0 | 64-117,26-26 | | | | | | | |
| | 3 | 0.3 | 0,-1,0 | 0,1,0 | 1,90,90 | 64-117,64-117 | 26 | 0,-1,0 | 0-180,0-180 | | | | |
| | 4 | 0 | | 1,1,0 | $\sqrt{2}$,90,45 | 71-109,26-64 | | | | | | | |

EP 1 387 322 A1

# FIG.11

# FIG.12

# FIG.13

| ASSUMED FIELD | SPACE NAME | EXISTING MATERIALS | ENERGY IT IS WISHED TO CALCULATE |
|---|---|---|---|
| BUILDING | IN-DOORS | AIR, CONCRETE, GLASS, LIGHTING, ETC. | LIGHT, HEAT |
| | OUT-DOORS | AIR, TREES, WATER, ASPHALT, LIGHTING, ETC. | |
| MEDICINE | BODY | BLOOD, SKIN, BONE, ORGANS, ETC. | RADIATION |
| COSMIC SCIENCE | COSMIC | STARS, GAS, SPACECRAFT, SPACE STATIONS | LIGHT, HEAT RADIATION |

FIG.14A

FIG.14B

FIG.14C

## INTERNATIONAL SEARCH REPORT

| | |
|---|---|
| International application No. | |
| PCT/JP02/04018 | |

**A. CLASSIFICATION OF SUBJECT MATTER**
Int.Cl⁷ G06T15/50

According to International Patent Classification (IPC) or to both national classification and IPC

**B. FIELDS SEARCHED**

Minimum documentation searched (classification system followed by classification symbols)
Int.Cl⁷ G06T15/50, G06F17/50, G06F19/00

Documentation searched other than minimum documentation to the extent that such documents are included in the fields searched

Jitsuyo Shinan Koho          1922-1996   Toroku Jitsuyo Shinan Koho   1994-2002
Kokai Jitsuyo Shinan Koho    1971-2002   Jitsuyo Shinan Toroku Koho   1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 62-198970 A  (Fujitsu Ltd.), 02 September, 1987 (02.09.87), | 1,2,12,13, 15-17 |
| A | Full text; Figs. 1 to 4 (Family: none) | 3-11,14 |
| Y | JP 8-235381 A  (Nippon Telegraph And Telephone Corp.), | 1,2,12,13, 15-17 |
| A | 13 September, 1996 (13.09.96), Full text; Figs. 1 to 4 (Family: none) | 3-11,14 |
| A | EP 251800 A2  (3D/EYE, Inc.), 07 January, 1988 (07.01.88), Full text; Figs. 1 to 13 & US 4928250 A          & JP 63-94380 A | 1-17 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 May, 2002 (13.05.02) | 28 May, 2002 (28.05.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP02/04018

C (Continuation). DOCUMENTS CONSIDERED TO BE RELEVANT

| Category* | Citation of document, with indication, where appropriate, of the relevant passages | Relevant to claim No. |
|---|---|---|
| A | US 5623429 A (Lucent Technologies Inc.), 22 April, 1997 (22.04.97), Full text; Figs. 1 to 5 & JP 7-288495 A | 1-17 |
| A | EP 532940 A2 (Matsushita Electric Industrial Co., ltd.), 24 March, 1993 (24.03.93), Full text; Figs. 1 to 20 & US 5422717 A & JP 5-54703 A | 1-17 |
| A | Toshiya NAKA, Heiretsu Hi-Vision graphics System, National TECHNICAL REPORT, 18 February, 1993 (18.02.93), vol.39, No.1, pages 94 to 95 | 1-17 |

Form PCT/ISA/210 (continuation of second sheet) (July 1998)